(19) Europäisches Patentamt
European Patent Office
Office européen des brevets

(11) **EP 1 995 091 A2**

(12) **EUROPEAN PATENT APPLICATION**

(43) Date of publication:
**26.11.2008 Bulletin 2008/48**

(51) Int Cl.:
***B60G 17/018*** (2006.01)  ***B60G 17/02*** (2006.01)

(21) Application number: **08156334.8**

(22) Date of filing: **16.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **17.05.2007 JP 2007131892**

(71) Applicant: **AISIN SEIKI KABUSHIKI KAISHA Kariya-city, Aichi 448-8650 (JP)**

(72) Inventors:
• **Hamada, Toshiaki**
**c/o Aisin Seiki Kabushiki Kaisha Kariya-city Aichi 448-8650 (JP)**

• **Sato, Katsuhiko**
**c/o Aisin Seiki Kabushiki Kaisha Kariya-city Aichi 448-8650 (JP)**
• **Kodama, Hiroyuki**
**c/o Aisin Seiki Kabushiki Kaisha Kariya-city Aichi 448-8650 (JP)**
• **Yasui, Yoshiyuki**
**c/o Aisin Seiki Kabushiki Kaisha Kariya-city Aichi 448-8650 (JP)**
• **Inden, Masahiro**
**c/o Aisin Seiki Kabushiki Kaisha Kariya-city Aichi 448-8650 (JP)**

(74) Representative: **TBK-Patent Bavariaring 4-6 80336 München (DE)**

(54) **Apparatus for controlling load for vehicle driving wheel**

(57) An object of the invention is to increase driving force of driving wheels at starting a vehicle, when the vehicle runs on a μ-sprit road. At first, a road surface for a driving wheel is detected, which has a higher coefficient of friction than that of a road surface for the other driving wheel. An operation for controlling grounded load of the driving wheels is carried out during a period, in which differential rotations of the driving wheels are limited. The grounded load of the driving wheel which is traveling on a high-μ road is increased, whereas the grounded load of the other driving wheel which is traveling on a low-μ road is decreased.

FIG. 1

**Description**

The present invention relates to an apparatus for controlling loads applied to vehicle driving wheels.

It is known in the art that a driving force at starting a vehicle is improved by controlling a load applied to a vehicle driving wheel. For example, as disclosed in Japanese Patent Publication No.2000-127733, in the case that a vehicle runs on a road (so-called a μ-sprit road), in which two driving wheels run on such road surfaces having different coefficients of friction from each other, a grounded load is increased for the driving wheel running on the road surface having a smaller coefficient of friction (a road surface of a low μ, which will be hereinafter referred to as a low-μ road), whereas a grounded load for the other driving wheel is decreased.

When the above technology is applied to a vehicle, which has a differential gear for distributing a driving torque of an engine equally to two driving wheels, the driving force at starting the vehicle is improved to some extent. This is because a driving force given by the driving wheel to a road surface of a high μ (which will be hereinafter referred to as a high-μ road) can not become larger than a maximum driving force given by the other driving wheel to the low-μ road, as a function of the differential gear. In other words, when the grounded load is increased for the driving wheel running on the low-μ road, the maximum driving force given by the driving wheel to the low-μ road is increased, and thereby the maximum driving force given by the driving wheel to the high-μ road is correspondingly increased. As a result, a sum of the driving forces of the two driving wheels is slightly improved.

According to the above prior art, the grounded load of the driving wheel running on the high-μ road is decreased by such an amount, which corresponds to an amount by which the grounded load of the driving wheel running on the low-μ road is increased. Therefore, in the case that the differential rotational for the driving wheels is not limited, the driving force is increased by the amount corresponding to an increase of the grounded load on the low-μ road, and the same torque is generated at the driving wheel on the high-μ road as a function of the differential gear. Thus, the technology of the above prior art is effective.

However, in a vehicle having a means for limiting the differential rotation, the driving wheels are more likely to slip at accelerating the rotation thereof by such an amount corresponding to the increase of the grounded load on the low-μ road. Then, the grounded load on the high-μ road is decreased. As a result, the sum of the driving forces of the two driving wheels may be decreased.

A differential device (the differential gear) is a device, which allows a rotation difference between the driving wheels, which is generated at a turning of a vehicle by a difference of a turning radius of the driving wheels, and which distributes equal driving forces to left and right driving wheels. When one of the driving wheels falls in a groove or runs over an ice road, such driving wheel runs idle so that the driving force can not be transmitted to the other driving wheel. The means for limiting the differential rotation is a means to solve the above problem. A limited-slip differential device, a differential lock device and so on are known as the means for limiting the differential rotation, according to which a rotation difference between the left and right wheels is limited.

The present invention is made in view of the foregoing problems, and has an object to provide an apparatus for controlling loads applied to vehicle driving wheels, for which the differential rotation is limited, so that a driving force at starting the vehicle is increased.

According to a feature of the present invention, an apparatus for controlling loads applied to driving wheels of a vehicle has a control portion (17a, 17c) for controlling grounded loads of first and second driving wheels (1RR, 1RL), the first driving wheel traveling on a first road whose coefficient of friction is higher than a coefficient of friction of a second road on which the second driving wheel travels. The control portion (17a, 17c) increases the grounded load of the first driving wheel and decreases the grounded load of the second driving wheel when the coefficient of friction first road is higher than the coefficient of friction of the second road at starting the vehicle.

According to another feature of the present invention, an apparatus for controlling loads applied to drivingwheels of a vehicle has a detecting portion (16e) for detecting a coefficient of friction of a first road on which a first driving wheel (1RR/1RL) travels, the coefficient of friction of the first road is higher than a coefficient of friction of a second road on which a second driving wheel (1RR/1RL) travels. The apparatus further has a control portion (17a, 17c) for controlling grounded load of the first and second driving wheels (1RR, 1RL), during a period in which differential rotations of the first and second driving wheels (1RR, 1RL) are limited by a limiting portion (14, 16, 5RR, 5RL).

A control of the grounded loads means such a control, according to which the grounded load of one of the first and second driving wheels (1RR, 1RL), which is traveling on the road having the coefficient of friction higher than that for the other driving wheel (1RR/1RL), is increased, whereas the grounded load of the other driving wheel (1RR/1RL) is decreased. The coefficient of friction means a maximum coefficient of friction between the road surface and the wheel.

As above, the control of the grounded loads according to the present invention is carried out when differential rotations of the first and second driving wheels (1RR, 1RL) are limited. Accordingly, the driving force of the driving wheel on the high-μ road can be made larger than the driving wheel on the low-μ road.

Furthermore, according to the apparatus for controlling loads applied to driving wheels of the invention, the load of the driving wheel on the high-μ road is increased, whereas the load of the other driving wheel on the low-μ road

is decreased, when the vehicle is running on a μ-sprit road. The driving force to be brought out on the high-μ road is generally larger than the driving force to be brought out on the low-μ road, unless an upper limit of the driving force on the high-μ road is suppressed by the driving force on the low-μ road by the differential rotation at the driving wheels. And an increase amount of the load to the driving wheel on the high-μ road becomes almost equal to a decrease amount of the load to the driving wheel on the low-μ road, as a result of the control for the grounded loads. Accordingly, the increase amount of the maximum driving force to be brought out on the high-μ road may become larger than the decrease amount of the maximum driving force to be brought out on the low-μ road, as a result of the control for the grounded loads.

As above, a total amount of the driving forces generated at both driving wheels maybe increased, if the differential rotations of the driving wheels are limited.

Accordingly, the driving force can be increased at starting the vehicle when the control of the start assistance of the present invention is applied, even in the case that the driving force could not be increased at starting the vehicle in the apparatus disclosed in the prior art, such as Japanese Patent Publication No. 2000-127733.

According to another feature of the present invention, the operation for limiting the differential rotations of the driving wheels is carried out by applying braking torque to one of the first and second driving wheels. And the control portion determines whether the limiting portion is in its operation or not, and controls the grounded loads of the first and second driving wheels, when the limiting portion is in its operation.

In the above situation, the driving force to be generated at the driving wheel on the high-μ road is not affected by the condition of the driving wheel on the low-μ road. As a result, the effect of the invention can be maximally obtained.

In the case that the control of the grounded loads is carried out, the grounded loads for the left and right driving wheels become different from each other. Then, an adverse influence may occur for a balance of the vehicle body in the left-right direction of the vehicle. Accordingly, the control for grounded loads will not be carried out as much as possible, except for the necessary cases.

According to a further feature of the invention, the control portion determines whether a vehicle speed is lower than a reference value or not, and controls the grounded loads of the driving wheels, when the vehicle speed is lower than the reference value. This feature is based on the following idea. The increase of the driving force is effective for increasing the driving force at starting the vehicle. In other words, such increase of the driving force is generally not necessary once the vehicle starts its movement.

According to a still further feature of the invention, the control portion determines whether a road surface gradient of the road, on which the vehicle is running, is larger than a reference value, namely whether it is an uphill road or not. Then, the control portion controls the grounded loads of the driving wheels, when the road surface gradient is larger than the reference value. This feature is based on an idea that the increase of the driving force at the vehicle start is not necessary, when the vehicle moves forward on a downhill road.

According to a still further feature of the invention, the detecting portion detects a difference between the coefficients of friction of the first and second roads, and controls the grounded loads of the first and second driving wheels, such that a difference between the grounded loads of the first and second driving wheels is made larger as the difference between the coefficients of friction of the first and second roads becomes larger.

The effect of the present invention becomes more remarkable, as the μ-difference between the high-μ road and the low-μ road becomes larger. Therefore, the stronger control for the grounded loads (namely, the increase of the difference amount of the grounded loads is made larger) is preferable, when the μ-difference becomes larger.

According to a still further feature of the invention, the apparatus for controlling the loads applied to the driving wheels may have a function of a traction control. The traction control portion (16) applies braking torque to the first driving wheel (1RR/1RL), wherein an acceleration slip of the first driving wheel is larger than a reference value and an acceleration slip of the second driving wheel is smaller than the reference value, in order to reduce the acceleration slip. The control portion (17a, 17c) of the apparatus for controlling the loads increases the grounded load of the second driving wheel, for which the braking torque by the traction control portion is not applied, and decreases the grounded load of the first driving wheel.

The coefficient of the friction of the road for the driving wheel (to which the braking torque is applied by the traction control portion 16) is lower than the coefficient of the friction of the road for the other driving wheel (to which the braking torque is not applied). Accordingly, the grounded load of the driving wheel (to which the braking torque is not applied by the traction control) can be increased, whereas the grounded load of the other driving wheel can be decreased. As a result, the grounded load of the driving wheel on the high-μ road can be increased, and the grounded load of the driving wheel on the low-μ road can be decreased.

The above and other objects, features and advantages of the present invention will become more apparent from the following detailed description made with reference to the accompanying drawings. In the drawings:

　　Fig. 1 is a schematic view showing a vehicle 100, to which the present invention is applied and on which various devices are mounted;
　　Fig. 2 is a block diagram showing detailed structures for functions of brake ECU 16 and suspension ECU 17;

Fig. 3 is a flowchart, whichwill be carriedout by a selecting portion 17c;

Fig. 4 shows an example for controlling suspension actuators 7RR and 7RL for rear wheels, wherein a rear-left driving wheel 1RL is on a high-$\mu$ road and a rear-right driving wheel 1RR is on a low-$\mu$ road;

Fig. 5 shows an example for controlling suspension actuators 7FR and 7FL for front wheels, wherein the rear-left driving wheel 1RL is on the high-$\mu$ road and the rear-right driving wheel 1RR is on the low-$\mu$ road;

Fig. 6 shows an example for controlling a stabilizer actuator 4R for the rear wheels, wherein the rear-left driving wheel 1RL is on the high-$\mu$ road and the rear-right driving wheel 1RR is on the low-$\mu$ road;

Fig. 7 shows an example for controlling a stabilizer actuator 4F for the front wheels, wherein the rear-left driving wheel 1RL is on the high-$\mu$ road and the rear-right driving wheel 1RR is on the low-$\mu$ road; and

Fig. 8 is a graph showing a relation between a target difference amount of grounded loads and $\mu$-difference.

**(First Embodiment)**

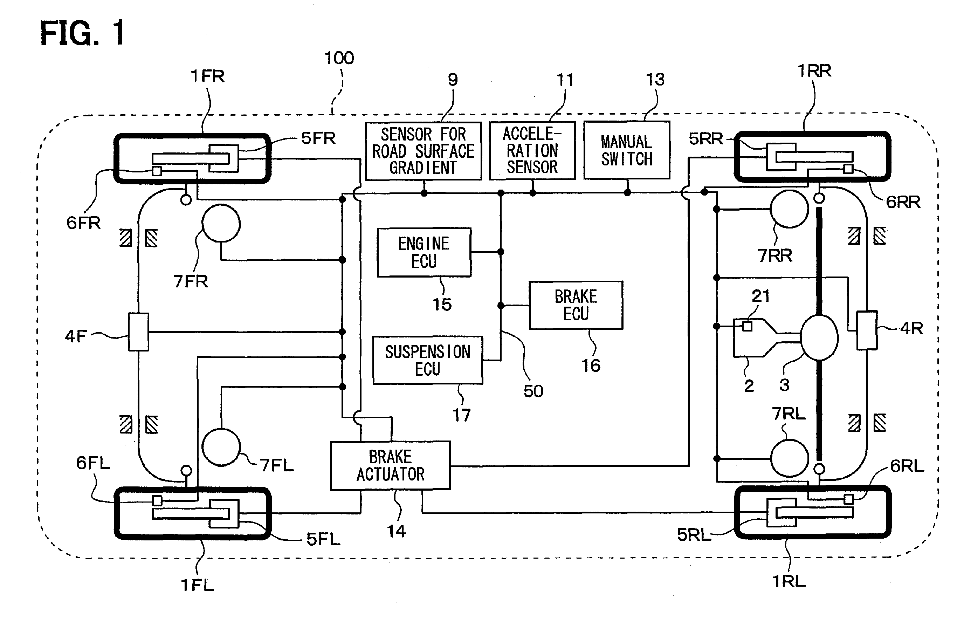

A first embodiment of the present invention will be hereinafter explained with reference to the drawings. Fig. 1 is a schematic view showing a vehicle 100 on which various devices are mounted. Brake devices 5FR, 5FL, 5RR, and 5RL are provided in the vehicle 100, for respectively applying braking torques to vehicle wheels, namely, a front-right wheel 1FR, a front-left wheel 1FL, a rear-right wheel 1RR, and a rear-left wheel 1RL. Wheel speed sensors 6FR, 6FL, 6RR and 6RL are provided adjacent to the vehicle wheels 1FR, 1FL, 1RR and 1RL for detecting respective wheel speeds of the vehicle wheels.

Suspension actuators 7FR, 7FL, 7RR and 7RL are provided adjacent to the vehicle wheels 1FR, 1FL, 1RR and 1RL, for respectively controlling suspension for the vehicle wheels. Each of the suspension actuators 7FR, 7FL, 7RR and 7RL has a hydraulic cylinder, which is connected at its one end to a vehicle body and at its other end to the corresponding vehicle wheel. A telescopic motion of each suspension actuator 7FR, 7FL, 7RR or 7RL is controlled by a well-known hydraulic device (not shown). Each of the suspension actuator 7FR, 7FL, 7RR and 7RL is expanded, when hydraulic pressure in the hydraulic cylinder is increased, so that a lifting force is generated (increased) at one end of the hydraulic cylinder for lifting up the vehicle body and a force is generated at the other end of the hydraulic cylinder to push down the vehicle wheel. As a result, the grounded force of the vehicle wheel is increased. On the other hand, each of the suspension actuator 7FR, 7FL, 7RR and 7RL is contracted, when the hydraulic pressure in the hydraulic cylinder is decreased, so that a pull-down force is generated at one end of the hydraulic cylinder for pulling down the vehicle body and a pull-up force is generated at the other end of the hydraulic cylinder to pull up the vehicle wheel.

The vehicle 100 shown in the drawing is a rear drive type vehicle, in which rear wheels are driving wheels, so that a driving torque of an engine 2 for driving the vehicle 100 is transmitted to the driving wheels of the rear-right wheel 1RR and the rear-left wheel 1RL via a differential gear 3. The differential gear 3 distributes the driving torque from the engine 2 equally to the rear-right wheel 1RR and the rear-left wheel 1RL.

A stabilizer actuator 4R for the rear wheels is provided at an intermediate portion of a stabilizing bar for the rear wheels. The stabilizer actuator 4R applies force to the rear-right wheel 1RR and the rear-left wheel 1RL for stabilizing a rolling posture of the vehicle body. The stabilizing bar for the rear wheels is generally formed into a U-shape, and connected at its one end to the rear-right wheel 1RR and at its other end to the rear-left wheel 1RL. The stabilizing bar for the rear wheels is supported by the vehicle body at both sides of the stabilizer actuator 4R for the rear wheels.

In the same manner to the above stabilizer actuator 4R, a stabilizer actuator 4F for the front wheels is provided at an intermediate portion of a stabilizing bar for the front wheels. The stabilizer actuator 4F applies force to the front-right wheel 1FR and the front-left wheel 1FL for stabilizing a rolling posture of the vehicle body. The stabilizing bar for the front wheels is generally formed into a U-shape, and connected at its one end to the front-right wheel 1FR and at its other end to the front-left wheel 1FL. The stabilizing bar for the front wheels is supported by the vehicle body at both sides of the stabilizer actuator 4F for the front wheels.

Each of the stabilizer actuators 4F and 4R has a mechanism (for example, a well-known motor mechanism) for applying torsional force to the respective stabilizing bars for the front and rear wheels. The torsional force is controlled by the stabilizer actuators 4F and 4R. The respective grounded loads for the driving wheels 1RR and 1RL can be controlled by controlling the torsional force applied by the stabilizer actuator 4R for the rear wheels. And in the same manner, the respective grounded loads for the driven wheels 1FR and 1FL can be changed by controlling the torsional force applied by the stabilizer actuator 4F for the front wheels.

A road surface gradient sensor 9, an acceleration sensor 11, a manual switch 13, a brake actuator 14, an engine ECU 15, a brake ECU 16, a suspension ECU 17, and an actuator 21 for the engine are mounted on the vehicle 100.

The above mentioned actuators, sensors and ECUs, (including the stabilizer actuators 4F and 4R, the wheel speed sensors 6FR, 6FL, 6RR and 6RL, the suspension actuators 7FR, 7FL, 7RR and 7RL, the road surface gradient sensor 9, the acceleration sensor 11, the manual switch 13, the brake actuator 14, the engine ECU 15, the brake ECU 16, the suspension ECU 17, and the actuator 21 for the engine) are connected with one another via an on-vehicle LAN 50, so that various signals are sent to and received from the on-vehicle LAN 50.

The road surface gradient sensor 9 detects a gradient of a road surface (gradients of uphill and downhill roads), on which the vehicle 100 is running (or stopped) to outputs a signal corresponding to the detected gradient. A well-known inclination sensor can be used as the road surface gradient sensor 9.

The acceleration sensor 11 detects accelerations in a forward and backward direction, in a vertical direction, and a left and right direction of the vehicle, to outputs a signal corresponding to the detected acceleration.

The manual switch 13 is a switch for outputting a signal corresponding to operated condition commanded by a user.

The brake actuator 14 is a device for generating braking torque at the braking devices 5FR, 5FL, 5RR and 5RL based on signals from the brake ECU 16.

The engine ECU 15 controls the actuators 21 (for example, a throttle actuator, a fuel injection device) for the engine, based on signals from the other devices connected to the on-vehicle LAN 50 (for example, an acceleration sensor, not shown).

The brake ECU 16 outputs control signals to the brake actuator 14, the engine ECU 15, and the suspension ECU 17, based on signals from the other devices connected to the on-vehicle LAN 50 (for example, a brake pedal stroke sensor, not shown). The brake ECU 16 detects, based on signals from the wheel speed sensors 6FR, 6FL, 6RR and 6RL and other signals, that coefficients of friction on the roads for the driving wheels 1RR and 1RL are different from each other, and outputs such detected result to the suspension ECU 17.

The suspension ECU 17 presumes the posture of the vehicle 100, based on the signal from the acceleration sensor 11 and other signals, and controls the suspension actuators 7FR, 7FL, 7RR and 7RL or the stabilizer actuators 4F and 4R so as to stabilize the vehicle 100 based on the presumed vehicle posture

The suspension ECU 17 controls the suspension actuators 7FR, 7FL, 7RR and 7RL or the stabilizer actuators 4F and 4R, in order to improve the driving force for the vehicle at its starting operation, when the driving wheels 1RR and 1RL are on the μ-sprit road. The μ-sprit road is such a road, in which two driving wheels 1RR and 1RL of the vehicle 100 run on such road surfaces having different coefficients of friction from each other.

The suspension ECU 17 determines whether the driving wheels 1RR and 1RL are on the μ-sprit road at the starting of the vehicle 100, based on the signal from the brake ECU 16. According to an important portion for an operation of the vehicle 100 at its starting when the driving wheels 1RR and 1RL are on the μ-sprit road, the grounded load for the driving wheel 1RR (or 1RL) which is on such a road surface having a higher coefficient of friction than that for the other driving wheel 1RL (or 1RR) is increased, whereas the grounded load for the other driving wheel (1RL) is decreased.

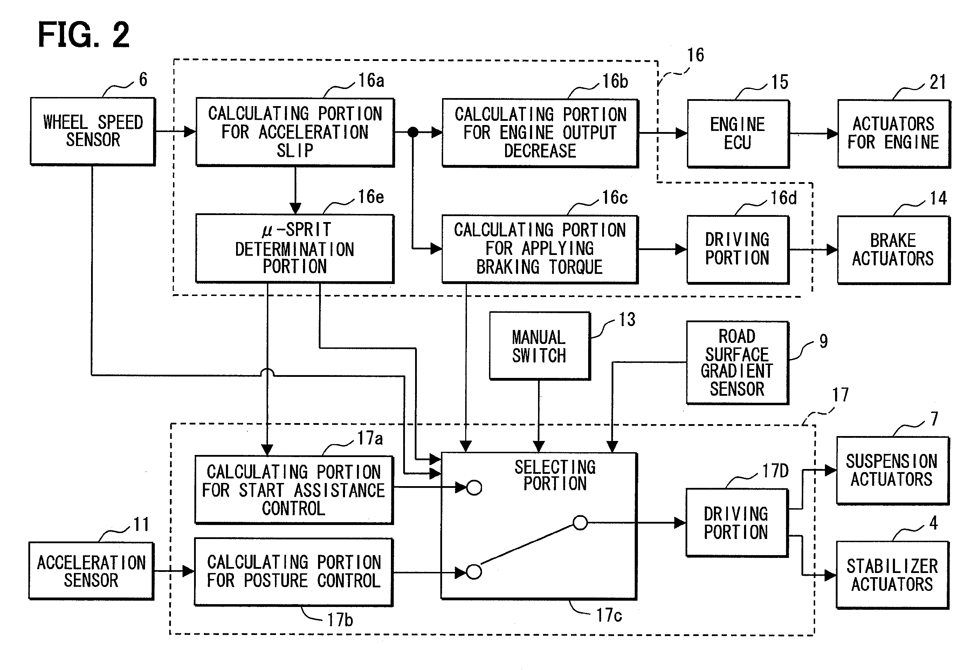

Fig. 2 is a block diagram showing detailed structures for functions of the brake ECU 16 and the suspension ECU 17. The brake ECU 16 and the suspension ECU 17 may be composed of an ordinary single micro computer. The brake ECU 16 and the suspension ECU 17 realize their respective functions by carrying out programs by respective CPUs. The brake ECU 16 and the suspension ECU 17 may be alternatively composed of independent micro computers.

The brake ECU 16 has an acceleration slip calculating portion 16a, a calculating portion 16b for an engine output decrease, a calculating portion 16c for applying braking torque, a driving portion 16d, and a μ-sprit determination portion 16e.

The acceleration slip calculating portion 16a calculates acceleration slip amounts for the respective wheels 1FR, 1FL, 1RR and 1RL, based on the signals from the wheel speed sensors 6FR, 6FL, 6RR and 6RL. The acceleration slip means a slip generated by the driving torque, which is applied to the vehicle wheel for accelerating the vehicle.

The acceleration slip amount for the vehicle wheel is an index for showing how much the wheel speed of such vehicle wheel is higher than the vehicle speed of the vehicle 100. For example, such a value, which is obtained by subtracting the vehicle speed from the wheel speed, is regarded as the acceleration slip amount. Alternatively, an acceleration slip ratio may be regarded as the acceleration slip amount, wherein the acceleration slip ratio can be calculated by the following formula: "acceleration slip ratio" = (wheel speed - vehicle speed) / vehicle speed.

The smallest amount among the wheel speeds obtained from the four wheel speed sensors 6FR, 6FL, 6RR and 6RL, may be regarded as the vehicle speed, or an average amount of the wheel speeds for the driven wheels 1FR and 1FL may be regarded as the vehicle speed. Furthermore, the acceleration slip calculating portion 16a may calculate the vehicle speed by using the acceleration of the vehicle from the acceleration sensor 11.

The calculating portion 16b for the engine output decrease calculates a decreasing amount for the engine output based on the acceleration slip amounts for the driving wheels 1RR and 1RL, which are calculated at the acceleration slip calculating portion 16a. The calculating portion 16b outputs a calculation result (the decreasing amount for the engine output) to the engine ECU 15. Then, the engine ECU 15 controls the actuator 21 for the engine in accordance with such decreasing amount for the engine output.

The calculating portion 16c for applying braking torque determines whether a traction control operation will be carried out or not, based on the acceleration slip amounts for the driving wheels 1RR and 1RL, and outputs its determination result to the suspension ECU 17. According to the present invention, the traction control operation, which is a well-known operation, is carried out. Namely, the braking torque is applied to such driving wheel among the driving wheels 1RR and 1RL, at which the acceleration slip amount exceeds a predetermined value, so that the driving force for the driving wheels 1RR and 1RL can be obtained. In addition, the calculating portion 16c calculates the braking torque to be applied to the driving wheels 1RR and/or 1RL when the calculating portion 16c determines that the traction control operation will be carried out, and outputs its calculated result (the braking torque) to the driving portion 16d.

For example, the calculating portion 16c determines that the traction control operation will be carried out when the acceleration slip amounts at the driving wheels 1RR and 1RL exceed the predetermined value. Then, the calculating portion 16c calculates the braking torque to be applied to the driving wheel 1RR or 1RL, at which the acceleration slip amount exceeds the predetermined value, and outputs its calculated result to the driving portion 16d. The calculating portion 16c may alternatively determine that the traction control operation will be carried out when the acceleration slip amount at one driving wheel (e.g. 1RR) is larger than that at the other driving wheel (e.g. 1RL) by a predetermined amount, and may calculate the braking torque to be applied to the driving wheel (1RR), at which the acceleration slip amount is larger than the other driving wheel (1RL).

The driving portion 16d (corresponding to an example for a differential limiting means) outputs, to the brake actuator 14, the braking torque calculated by the calculating portion 16c as well as such information showing the driving wheel to which the braking torque is applied. As a result, the brake actuator 14 operates the braking device, by such an amount corresponding to the calculated braking torque, for the driving wheel to which the braking torque is applied.

As already explained above, the differential gear 3 distributes the driving torque from the engine 2 equally to the driving wheels 1RR and 1RL. Therefore, when the braking torque is applied by the braking device to the driving wheel, at which the acceleration slip amount is larger than the other, the driving force from the engine 2 to the other driving wheel is increased by such an amount corresponding to the braking torque. As a result, the driving force from the driving wheel, at which the acceleration slip amount is smaller than the other, to the road surface is increased.

The μ-sprit determination portion 16e detects the road surface, the coefficient of friction of which is higher than the other, based on the acceleration slip amounts of the driving wheels 1RR and 1RL calculated by the acceleration slip calculating portion 16a, and outputs its determination result (detected result) to the suspension ECU 17. More exactly, only when either one of the acceleration slip amounts for the driving wheels 1RR and 1RL exceeds a predetermined value, the μ-sprit determination portion 16e determines that the coefficient of friction for the road surface at which the acceleration slip amount of the driving wheel exceeds the predetermined value is smaller than that of the road surface for the other driving wheel. Hereinafter, the road surface having a higher (larger) coefficient of friction is referred to as a high-μ road, whereas the road surface having a lower (smaller) coefficient of friction is referred to as a low-μ road.

The suspension ECU 17 has a calculating portion 17a for start assistance, a calculating portion 17b for a posture control, a selecting portion 17c, and a driving portion 17d. The calculating portion 17a for start assistance calculates a load control amount for the start assistance (corresponding to an example for grounded load control), based on the detected result outputted from the μ-sprit determination portion 16e. The start assistance means such a control operation, according to which a distribution of the grounded loads for the vehicle wheels 1FR, 1FL, 1RR, and 1RL is changed in order to increase the driving force at starting the vehicle. The operation of the start assistance will be explained below.

The calculating portion 17b for the posture control calculates a roll momentum and a pitch momentum for the vehicle based on the signal from the acceleration sensor 11. Then, the calculating portion 17b for the posture control further calculates a control content to be carried out to the stabilizer actuators 4F and 4R in order to stabilize the posture by suppressing the roll movement of the vehicle 100, or calculates a control content to be carried out to the suspension actuators 7FR, 7FL, 7RR, and 7RL in order to stabilize the posture by suppressing the roll movement and pitch movement of the vehicle 100.

The selecting portion 17c determines which of the calculated results of the calculating portion 17a for start assistance and the calculating portion 17b for the posture control should be actually reflected to which of the stabilizer actuators 4F and 4R or the suspension actuators 7FR, 7FL, 7RR, and 7RL. And the selecting portion 17c controls the driving portion 17d based on the determination result.

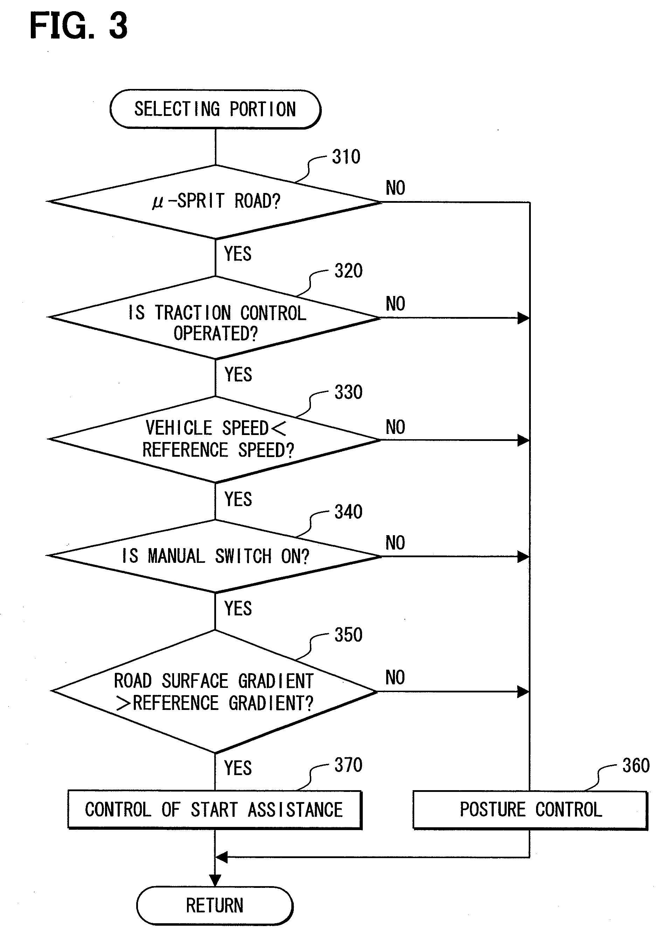

The selecting portion 17c repeatedly carries out a process 300 shown in Fig. 3 for the above determination. In the process 300, the selecting portion 17c determines at a step 310 whether the vehicle 100 is running on the μ-sprit road, based on the signal outputted from the μ-sprit determination portion 16e. When the determination is YES, a step 320 will be carried out. When the determination is NO, the process goes to a step 360.

At the step 320, the selecting portion 17c determines whether the traction control operation is being carried out, based on the signal outputted from the calculating portion 16c for applying the braking torque. When the determination is YES, the process goes to a step 330, whereas the determination is NO, the process goes to the step 360.

At the step 330, the selecting portion 17c determines whether the vehicle speed is lower than a reference speed or not. The calculation of the vehicle speed can be done, for example, in the same manner to the calculation of the acceleration slip calculating portion 16a. The reference speedmaybe a constant value (for example, 10 Km/H) memorized in advance, or may be such a value which will be changed depending on various conditions. The determination at this step 330 is to determine whether the vehicle has just started its movement or not. When the determination is YES, the process goes to a step 340, whereas the determination is NO, the process goes to the step 360.

At the step 340, the selecting portion 17c determines whether the latest operation for the manual switch 13 was such an operation for allowing the control of the start assistance, based on the signal from the manual switch 13. When the determination is YES, the process goes to a step 350, whereas the determination is NO, the process goes to the step 360.

At the step 350, the selecting portion 17c determines whether a road surface gradient in a pitch direction of a road on which the vehicle 100 is running is larger than a reference gradient, based on the signal from the road surface gradient sensor 9. When the road surface gradient is larger than the reference gradient, the road surface is inclined in an uphill direction in a vehicle running direction at the gradient larger than the reference gradient, namely the road has a steeper road surface than that of the reference gradient. The reference gradient may be a constant value memorized in advance, or may be such a value which will be changed depending on various conditions. The reference gradient may be a negative value (that is, a downhill) or positive value (that is, the uphill). When the determination is YES, the process goes to a step 370, whereas the determination is NO, the process goes to the step 360.

At the step 360, the selecting portion 17c decides that the posture control will be carried out, namely the selecting portion 17c controls the driving portion 17d so that the calculated result of the calculating portion 17b for the posture control is reflected. And at the step 370, the selecting portion 17c decides that the control for the start assistance will be carried out, namely the selecting portion 17c controls the driving portion 17d so that the calculated result of the calculating portion 17a for the start assistance is reflected.

As above, the selecting portion 17c drives the driving portion 17d (the step 370) in order to carry out the control for the start assistance, when the vehicle 100 is running on the μ-sprit road (the step 310), when the traction control operation is being carried out (the step 320), when the vehicle 100 is running at a low speed (the step 330), when the vehicle driver commands that the control for the start assistance is to be carried out (the step 340), and when the road surface gradient is larger than the reference gradient (the step 350). In the case that any one of the above conditions (the steps 310 to 350) is not met, the driving portion 17d is prohibited from carrying out the control for the start assistance (the step 360).

The cases, in which the control for the start assistance is carried out, is limited as above. This is because the grounded loads for the driving wheels 1RR and 1RL become different from each other when the control for the start assistance is carried out, and an adverse influence may occur for a balance of the vehicle body in the left-right direction of the vehicle 100. Accordingly, the control for the start assistance will not be carried out as much as possible, except for the necessary cases.

For example, the driving portion 17d is prohibited from carrying out the control for the start assistance, when the vehicle speed is higher than the reference speed. This is because the necessity for the control for the start assistance becomes smaller once the vehicle starts its movement. Further, the control for the start assistance is not carried out, when the road surface gradient is smaller than the reference gradient. This is because the necessity for the control for the start assistance becomes smaller when the vehicle is running down on the downslope. Furthermore, the control for the start assistance is not carried out, either, unless the vehicle driver operates the manual switch 13 for allowing the control for the start assistance. This is simply because it is not necessary to carry out the control for the start assistance, since the vehicle driver does not want such control.

An operation for calculating a load control amount for the control of the start assistance in the calculating portion 17a, as well as a content for the control of the start assistance carried out by the driving portion 17d based on the calculated result of the calculating portion will be explained.

The calculating portion 17a calculates a target difference amount of the grounded loads for the driving wheels as the load control amount, in order that the grounded load of the driving wheel on the high-μ road (which is determined by the μ-sprit determination portion 16e between the driving wheels 1RR and 1RL) is made larger than the grounded load of the driving wheel on the low-μ road (which is determined by the μ-sprit determination portion 16e). The target difference amount of the grounded loads for the driving wheels is a target amount for a difference value obtained by subtracting the grounded load of the driving wheel on the low μ-road from the grounded load of the other driving wheel on the high-μ road.

In addition, the calculating portion 17a calculates a target difference amount of the grounded loads for the driven wheels as the load control amount, in order that the grounded load of the driven wheel which is on a diagonal line of the driving wheel on the high-μ road (which is determined by the μ-sprit determination portion 16e between the driving wheels 1RR and 1RL) is made larger than the grounded load of the other driven wheel which is on a diagonal line of the driving wheel on the low-μ road (which is determined by the μ-sprit determination portion 16e). The target difference amount of the grounded loads for the driven wheels is a target amount for a difference value obtained by subtracting the grounded load of the driven wheel (which is on the diagonal line of the driving wheel on the low-μ road) from the grounded load of the other driven wheel (which is on the diagonal line of the driving wheel on the high-μ road). Those two target difference amounts of the grounded loads for the driving wheels and the driven wheels may be the same amount to each other or different from each other. Furthermore, the target difference amounts of the grounded loads may be a constant value.

For example, when the rear-left wheel 1RL is on the high-μ road and the rear-right wheel 1RR is on the low-μ road, the calculating portion 17a calculates the target difference amounts of the grounded loads for the respective driving wheel and the driven wheel, in order to increase the grounded loads for the rear-left wheel 1RL and the front-right driven wheel 1FR, which are on the diagonal line.

The selecting portion 17c decides the control content for the stabilizer actuators 4F and 4R or for the suspension actuators 7FR, 7FL, 7RR and 7RL, and controls the stabilizer actuators 4F and 4R or the suspension actuators 7FR, 7FL, 7RR and 7RL with such decided control content, in order to realize the target difference amounts of the grounded loads for the driving wheels 1RR and 1RL as well as the target difference amounts of the grounded loads for the driven wheels 1FR and 1FL. As a result, the selecting portion 17c controls the driving portion 17d, so that the calculated results of the calculating portion 17a are reflected in the operation for the control of the start assist.

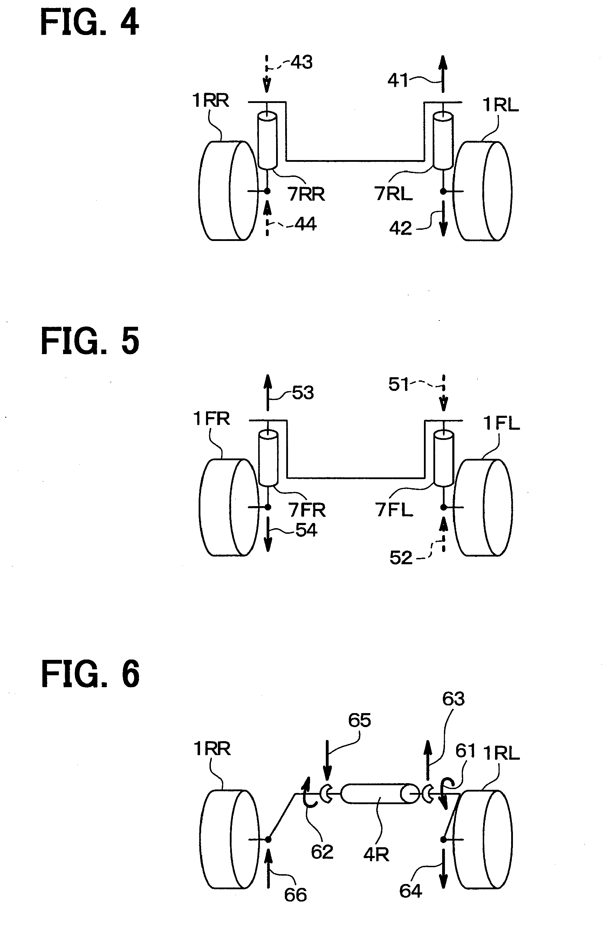

Fig. 4 shows an example for controlling the suspension actuators 7RR and 7RL for the rear wheels, wherein the rear-left driving wheel 1RL is on the high-μ road and the rear-right driving wheel 1RR is on the low-μ road. Fig. 5 likewise shows an example for controlling the suspension actuators 7FR and 7FL for the front wheels, wherein the rear wheels are on the high and low-μ roads as in the same manner to Fig. 4.

As shown in Fig. 4, hydraulic pressure to be applied to the hydraulic cylinder of the suspension actuator 7RL for the rear-left wheel 1RL (which is on the high-μ road) is increased by the control of the driving portion 17d, so that a force 41 for lifting up the vehicle body as well as a force 42 for pushing down the rear-left wheel 1RL is generated. As a result, the grounded load for the rear-left wheel 1RL is increased, and the grounded load for the rear-right wheel 1RR is correspondingly decreased.

Furthermore, by the control of the driving portion 17d, hydraulic pressure to be applied to the hydraulic cylinder of the suspension actuator 7RR for the rear-right wheel 1RL (which is on the low-μ road) is decreased, so that a force 43 for pulling down the vehicle body as well as a force 44 for pulling up the rear-right wheel 1RR is generated. As a result, the grounded load for the rear-left wheel 1RL is further increased, and the grounded load for the rear-right wheel 1RR is correspondingly decreased.

As shown in Fig. 5, hydraulic pressure to be applied to the hydraulic cylinder of the suspension actuator 7FR for the front-right wheel 1FR is increased by the control of the driving portion 17d, so that a force 53 for lifting up the vehicle body as well as a force 54 for pushing down the front-right wheel 1FR is generated. As a result, the grounded load for the front-right wheel 1RL is increased, and the grounded load for the front-left wheel 1FL is correspondingly decreased.

Furthermore, by the control of the driving portion 17d, hydraulic pressure to be applied to the hydraulic cylinder of the suspension actuator 7FL for the front-left wheel 1FL (which is on the high-μ road) is decreased, so that a force 51 for pulling down the vehicle body as well as a force 52 for pulling up the front-left wheel 1FL is generated. As a result, the grounded load for the front-right wheel 1FR is further increased, and the grounded load for the front-left wheel 1FL is correspondingly decreased.

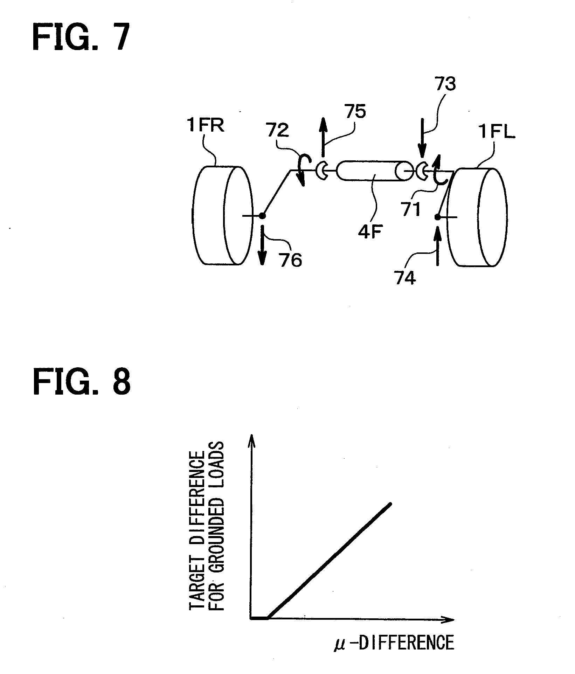

Fig. 6 shows an example for controlling the stabilizer actuator 4R for the rear wheels, wherein the rear-left driving wheel 1RL is on the high-μ road and the rear-right driving wheel 1RR is on the low-μ road. Fig. 7 likewise shows an example for controlling the stabilizer actuator 4F for the front wheels, wherein the rear wheels are on the high and low-μ roads as in the same manner to Fig. 6.

As shown in Fig. 6, as a result of the control of the driving portion 17d, the stabilizer actuator 4R for the rear driving wheels applies to the stabilizer bar a torsional force 61 for pushing down the rear-left wheel 1RL (which is on the high-μ road) as indicated by an arrow 64, and a torsional force 62 for pulling up the rear-right wheel 1RR (which is on the low-μ road) as indicated by an arrow 66.

As a result, the grounded load for the rear-left wheel 1RL is increased, and the grounded load for the rear-right wheel 1RR is correspondingly decreased. In addition, a force 63 for lifting up the vehicle body is generated at the stabilizer bar close to the rear-left wheel 1RL, and a force 65 for pushing down the vehicle body is generated at the stabilizer bar close to the rear-right wheel 1RR.

In a similar manner to the above Fig. 6, as shown in Fig. 7, when the drivingportion 17d is controlled, the stabilizer actuator 4F for the front driven wheels applies to the stabilizer bar a torsional force 72 for pushing down the front-right wheel 1FR as indicated by an arrow 76, and a torsional force 71 for pulling up the front-left wheel 1FR as indicated by an arrow 74.

As a result, the grounded load for the front-right wheel 1FR is increased, and the grounded load for the front-left wheel 1FL is correspondingly decreased. In addition, a force 75 for lifting up the vehicle body is generated at the stabilizer bar close to the front-right wheel 1FR, and a force 73 for pushing down the vehicle body is generated at the stabilizer bar close to the front-left wheel 1FL.

In each of the cases, where the suspension actuators 7FR, 7FL, 7RR and 7RL are controlled, or where the stabilizer actuators 4F and 4R are controlled, the force 41/63 for lifting up the vehicle body (a rear portion of the vehicle body at which the rear wheels are provided) on the side of the high-μ road as well as the force 43/65 for pushing down the rear portion of the vehicle body on the side of the low-μ road is generated, as a result of the control for the grounded load of the rear driving wheels 1RR and 1RL.

On the other hand, the force 53/75 for lifting up the vehicle body (a front portion of the vehicle body at which the front wheels are provided) on the side of the low-μ road as well as the force 51/73 for pushing down the front portion of the vehicle body on the side of the high-μ road is generated, as a result of the control for the grounded load of the front driven wheels 1FR and 1FL.

The rolling and pitching of the vehicle is suppressed by balancing out the forces exerted from the driving wheel side and the forces exerted from the driven wheel side. As the forces for lifting up the vehicle body are generated not only at the driving wheel on the high-μ road but also at the driven wheel on the diagonal line, the grounded load at the driving wheel on the high-μ road is further increased.

According to the above control of the start assistance, the grounded load at the driving wheel on the high-μ road is increased and the grounded load at the driving wheel on the low-μ road is decreased. The driving force to be brought out on the high-μ road is generally larger than the driving force to be brought out on the low-μ road, unless an upper limit of the driving force on the high-μ road is suppressed by the driving force on the low-μ road by the differential rotation at the driving wheels. An increase amount of the maximum driving force to be brought out on the high-μ road may become larger than a decrease amount of the maximum driving force to be brought out on the low-μ road, as a result of the control for the grounded loads.

Accordingly, the driving force can be increased at starting the vehicle when the control of the start assistance of the present invention is applied, even in the case that the driving force could not be increased at starting the vehicle in the apparatus disclosed in the prior art, such as Japanese Patent Publication No. 2000-127733.

The above explained control for the start assistance is not carried out, when the traction control is carried out for applying the braking torque to the driving wheels on the low-μ road to assure the driving force at the driving wheels 1RR and 1RL. Therefore, the driving force to be generated at the driving wheel on the high-μ road is not affected by the condition of the driving wheel on the low-μ road. As a result, the effect obtained by increasing the load for the driving wheel on the high-μ road becomes most remarkable.

Now, examples of a total driving force of the both driving wheels are explained in the following cases A, B and C, under the condition that the coefficient of friction of the high-μ road is 0.25, the coefficient of friction of the low-μ road is 0.1, a weight of the vehicle 1600 Kg, and the limitation for the differential rotation is working.

<Case A>: This is the case, in which the control for the start assistance of the present invention is not carried out:

A weight for each driving wheels is 400 Kg. A total maximum driving force "F" of the both driving wheels can be obtained by the following formula, if a maximum driving force is brought out at each driving wheel;

$$\texttt{F = (the maximum driving force "H" of the driving wheel}$$
$$\texttt{on the high-μ road) + (the maximum driving force "L" of the driving}$$
$$\texttt{wheel on the low-μ road)}$$

$$\texttt{H = 400 Kg X 0.25 X 9.81 m/s}^2 \texttt{ = 981 N}$$

$$\texttt{L = 400 Kg X 0.1 X 9.81 m/s}^2 \texttt{ = 392.4 N}$$

Therefore, the total maximum driving force "F" of the both driving wheels is "1373.4 N".

<Case B>: This is the case, in which the control for the start assistance of the present invention is carried out:

In this case B, it is assumed that the grounded load for the driving wheel on the high-μ road is increased by 20% with the control for the start assistance, whereas the grounded load for the driving wheel on the low-μ road is decreased by 20%. As a result, the grounded loads for the respective driving wheels respectively become 480 Kg for the driving wheel on the high-μ road and 320 Kg for the driving wheel on the low-μ road. A total maximum driving force "F" of the both driving wheels can be obtained by the following formula:

$$F = \text{(the maximum driving force ``H'' of the driving wheel on the high-}\mu\text{ road)} + \text{(the maximum driving force ``L'' of the driving wheel on the low-}\mu\text{ road)}$$

$$H = 480 \text{ Kg} \times 0.25 \times 9.81 \text{ m/s}^2 = 1177.2 \text{ N}$$

$$L = 320 \text{ Kg} \times 0.1 \times 9.81 \text{ m/s}^2 = 313.92 \text{ N}$$

Therefore, the total maximum driving force "F" of the both driving wheels is "1491.12 N". Accordingly, the total maximum driving force of the case B can be increased by 8 % compared with the case A.

<Case C>: This is the case, in which the control for the grounded loads, which is explained in the Japanese Patent Publication No.2000-127733, is carried out:

According to the control of the Japanese Patent Publication No.2000-127733, contrary to the present embodiment, the grounded load for the driving wheel on the low-$\mu$ road is increased, whereas the grounded load for the driving wheel on the high-$\mu$ road is decreased.

In this case C, it is assumed that the grounded load for the driving wheel on the high-$\mu$ road is decreased by 20%, whereas the grounded load for the driving wheel on the low-$\mu$ road is increased by 20%. As a result, the grounded loads for the respective driving wheels respectively become 320 Kg for the driving wheel on thehigh-$\mu$ road and 480 Kg for the driving wheel on the low-$\mu$ road. A total maximum driving force "F" of the both driving wheels can be obtained by the following formula:

$$F = \text{(the maximum driving force ``H'' of the driving wheel on the high-}\mu\text{ road)} + \text{(the maximum driving force ``L'' of the driving wheel on the low-}\mu\text{ road)}$$

$$H = 320 \text{ Kg} \times 0.25 \times 9.81 \text{ m/s}^2 = 784.8 \text{ N}$$

$$L = 480 \text{ Kg} \times 0.1 \times 9.81 \text{ m/s}^2 = 470.88 \text{ N}$$

Therefore, the total maximum driving force "F" of the both driving wheels is "1255.68 N". Accordingly, the total maximum driving force (1255.68 N) of the case C becomes smaller than that (1373.4 N) for the case A.

As understood from the above examples, the total maximum driving force for the driving wheels of the vehicle 100 can be increased, and thereby the driving force at starting the vehicle 100 is increased, when the grounded load of the driving wheel on the high-$\mu$ road is increased in the case that the limitation for the differential rotation is working.

**(Second Embodiment)**

A second embodiment of the present invention will be explained. The second embodiment differs from the first embodiment in that the target difference amount of the grounded loads for the driving wheels as well as the target difference amount of the grounded loads for the driven wheels, each of which is calculated by the calculating portion 17a, will be changed depending on a difference of the coefficients of friction between the high-$\mu$ road and the low-$\mu$ road (hereinafter, referred to as a $\mu$-difference).

For the above purpose, the $\mu$-sprit determination portion 16e detects not only the road surface, the coefficient of friction of which is higher than the other, but also presumes the amount of the coefficient of friction. The $\mu$-sprit

determination portion 16e outputs such presumed amount to the calculating portion 17a for the start assistance.

Various methods for presuming the coefficient of friction for the driving wheels are known in the art. Any one of those methods may be used in the present embodiment. For example, in the case that well-known frictional force sensors and load sensors are provided at each wheel of the vehicle, a ratio of detected amounts from such sensors (a ratio of the frictional force with respect to the load) is calculated, and a maximum value of the ratio for the driving wheel (which is going into a slide) may be regarded as the coefficient of friction for the road surface.

Alternatively, in the case that the vehicle 100 has, in addition to the load sensors, a torque detecting device for detecting torque applied to a portion of an axle connected to the respective wheels, frictional forces for the respective wheels are calculated, based on the torques and accelerations of rotation (angular acceleration) for the respective wheels, which are calculated from the detected amounts of the wheel speed sensors 6FR, 6FL, 6RR and 6RL. a ratio of the frictional force with respected to the detected amounts (the loads) of the load sensors is calculated, and a maximum value of the ratio for the driving wheel (which is going into a slide) may be regarded as the coefficient of friction for the road surface.

In the above embodiment, a value which is a quarter of the vehicle weight may be regarded as the grounded load, instead of the load detected by the respective load sensors. Alternatively, the loads which are distributed by the control of the start assistance may be regarded as the loads for the respective wheels.

Furthermore, in the case that the vehicle 100 has an anti-lock braking system (ABS system), a well-known function of the ABS system for calculating the coefficient of the friction for the road surface can be used. The coefficients of the friction for the respective wheels, when the vehicle has stopped at its current position, may be regarded as the coefficients of the friction for the respective wheels when carrying out the control of the start assistance.

Fig. 8 is a graph showing a relation between the target difference amount of the grounded loads (which are used in the present embodiment) and the μ-difference. As shown in Fig. 8, the target difference amount of the grounded loads is made zero until the μ-difference becomes larger than a predetermined threshold value, and the target difference amount of the grounded loads is increased in response to the increase of μ-difference in a range above the predetermined threshold value.

As above, the difference amount of the grounded loads for the driving wheels as well as the difference amount of the grounded loads for the driven wheels is increased in response to the increase of μ-difference, so that a detailed control for the start assistance can be realized. The effect of the present invention becomes more remarkable, as the μ-difference between the high-μ road and the low-μ road becomes larger. Therefore, the stronger control of the start assistance (namely, the increase of the difference amount of the grounded loads is made larger) is preferable, when the μ-difference becomes larger.

As understood from the above explanation, the control of the start assistance will not be carried out, until the μ-difference reaches the predetermined threshold value, namely until the necessity for the control of the start assistance becomes larger enough to perform the control. As a result, a possibility for causing that the vehicle may lose its balance due to an unnecessaryperformance of the control of the start assistance can be reduced.

In the above embodiments, the brake ECU 16 and the suspension ECU 17 constitute an apparatus for controlling vehicle driving wheels of the present invention.

**(Modifications)**

The embodiments of the present invention are explained above, however, the present invention is not limited to those embodiments. Various modifications can be possible within the scope of the present invention.

As explained already, the calculating portion 17a for the start assistance increases the grounded load of the driving wheel on the high-μ road and decreases the grounded load of the driving wheel on the low-μ road, based on the determination result of the μ-sprit determination portion 16e. However, the calculating portion 17a may not use the determination result of the μ-sprit determination portion 16e, when deciding the driving wheel for which grounded load is increased. For example, based on the fact that the calculating portion 16c operates the control for applying the braking torque to one of the driving wheels in order to decrease the acceleration slip amount, the calculating portion 17a can increase the grounded load for such driving wheel to which the braking torque is not applied and decrease the grounded load for the other driving wheel.

In the above situation, the coefficient of the friction of the road for the driving wheel (to which the braking torque is applied by the calculating portion 16c) is lower than the coefficient of the friction of the road for the other driving wheel (to which the braking torque is not applied). Accordingly, as a result of the above operation of the calculating portion 17a, the grounded load of the driving wheel on the high-μ road can be increased, and the grounded load of the driving wheel on the low-μ road can be decreased.

Further, in the above embodiments, the differential gear 3 is provided for distributing the torque from the engine 2 equally to the driving wheels. However, a well-known limited-slip differential device (which corresponds to a means for limiting differential rotation) may be used instead of the differential gear 3. Furthermore, a differential lock device for making the rotational speed of the drivingwheels equal to each other (which also corresponds to the means for limiting differential rotation) may be used instead of the differential gear 3.

In the above cases, the effect of the present invention can be obtained, without carrying out the traction control. This is because the limited-slip differential device or the differential lock device limits the equal distribution of the driving torque from the engine 2. These devices have a commonality to the traction control, in a meaning that the differential rotational of the driving wheels is limited.

As above, so long as the vehicle control apparatus has the function for limiting the differential rotation at the driving wheels, the effect that the driving force for the driving wheel on the high-μ road is suppressed by the slip of the driving wheel on the low-μ road is absorbed. Accordingly, the driving force can be increased at starting the vehicle when the control of the start assistance of the present invention is applied, even in the case that the driving force could not be increased at starting the vehicle in the apparatus disclosed in the prior art, such as Japanese Patent Publication No.2000-127733.

The selecting portion 17c may stop the operation of the calculating portion 17a, when the determination at any one of the steps 310 to 350 is NO, namely when the control of the start assistance is prohibited.

It is not always necessary for the selecting portion 17c to perform the determination at the steps 330, 340 and 350. It may be so modified that the process goes to the step 370, when the determinations at both of the steps 310 and 320 are YES.

It may be so modified that only either one of the suspension actuators 7RR and 7RL will be controlled to make the grounded loads for the driving wheels 1RR and 1RL different from each other. In the same manner, it may be so modified that only either one of the suspension actuators 7FR and 7FL will be controlled to make the grounded loads for the driven wheels 1FR and 1FL different from each other.

In the above embodiments, the present invention is applied to the vehicle having the rear driving wheels. However, the present invention can be also applied to a vehicle having a front driving wheels.

In the above embodiments, the hydraulic pressure in one of the hydraulic cylinders for the rear suspension actuators 7RL and 7RR is increased, whereas the hydraulic pressure in the other hydraulic cylinder is decreased, in order that the grounded load of one of the driving wheels 1RL and 1RR is increased, whereas the grounded load of the other driving wheel is decreased.

However, even if the hydraulic pressure in one of the hydraulic cylinders for the rear suspension actuators 7RL and 7RR is only increased, such an effect can be achieved, according to which the grounded load of the driving wheel for which the hydraulic pressure is increased becomes larger and instead the grounded load of the other driving wheel becomes smaller.

Furthermore, even if the hydraulic pressure in one of the hydraulic cylinders for the rear suspension actuators 7RL and 7RR is only decreased, such an effect can be achieved, according to which the grounded load of the driving wheel for which the hydraulic pressure is decreased becomes smaller and instead the grounded load of the other driving wheel becomes larger.

As shown in Fig. 4, the hydraulic pressure to be applied to the hydraulic cylinder of the suspension actuator 7RL for the rear-left wheel 1RL (which is on the high-μ road) is increased by the control of the driving portion 17d, so that the force 41 for lifting up the vehicle body as well as the force 42 for pushing down the rear-left wheel 1RL is generated. As a result, the grounded load for the rear-left wheel 1RL is increased, and the grounded load for the rear-right wheel 1RR is correspondingly decreased.

Furthermore, by the control of the driving portion 17d, the hydraulic pressure to be applied to the hydraulic cylinder of the suspension actuator 7RR for the rear-right wheel 1RL (which is on the low-μ road) is decreased, so that the force 43 for pulling down the vehicle body as well as the force 44 for pulling up the rear-right wheel 1RR is generated. As a result, the grounded load for the rear-left wheel 1RL is further increased, and the grounded load for the rear-right wheel 1RR is correspondingly decreased.

As shown in Fig. 5, the hydraulic pressure to be applied to the hydraulic cylinder of the suspension actuator 7FR for the front-right wheel 1FR is increased by the control of the driving portion 17d, so that the force 53 for lifting up the vehicle body as well as the force 54 for pushing down the front-right wheel 1FR is generated. As a result, the grounded load for the front-right wheel 1RL is increased, and the grounded load for the front-left wheel 1FL is correspondingly decreased.

Furthermore, by the control of the driving portion 17d, the hydraulic pressure to be applied to the hydraulic cylinder of the suspension actuator 7FL for the front-left wheel 1FL (which is on the high-μ road) is decreased, so that the force 51 for pulling down the vehicle body as well as the force 52 for pulling up the front-left wheel 1FL is generated. As a result, the grounded load for the front-right wheel 1FR is further increased, and the grounded load for the front-left wheel 1FL is correspondingly decreased.

The actuators for changing the grounded loads may not be limited to those actuators explained in the above embodiments. For example, stabilizers which are disclosed in, for example, Japanese Patent Publication No.2000-127733, Japanese Patent Publication No.2006-168386, or Japanese Patent Publication No.2005-238971, or a hydro-pneumatic suspension, a pneumatic suspension, or the like may be used.

The road surface gradient may be detected by use of the acceleration sensor 11 without using the road surface gradient sensor 9. For example, the road surface gradient may be detected by use of the acceleration in the forward and backward direction. In the case that the inclination of the vehicle in the left-right direction is small, the road surface gradient may be calculated under the assumption that a difference amount between the acceleration applied to the vehicle in the vertical direction and the acceleration of the gravity is wholly caused by the inclination of the vehicle in the forward and backward direction. An accuracy of the road surface gradient calculated as above is enough high to be practically used.

It is not always necessary to operate the stabilizer 4F for the front wheels to generate the torsional force at the stabilizer bar, if it is not required to achieve the effect for stabilizing the vehicle posture, or when such effect could be realized by another method. In such a case, it is either not necessary to control the hydraulic pressure of the hydraulic cylinders for the suspension actuators 7FR and 7FL for the front wheels.

An object of the invention is to increase driving force of driving wheels at starting a vehicle, when the vehicle runs on a μ-sprit road. At first, a road surface for a driving wheel is detected, which has a higher coefficient of friction than that of a road surface for the other driving wheel. An operation for controlling grounded load of the driving wheels is carried out during a period, in which differential rotations of the driving wheels are limited. The grounded load of the driving wheel which is traveling on a high-μ road is increased, whereas the grounded load of the other driving wheel which is traveling on a low-μ road is decreased.

**Claims**

1. An apparatus for controlling loads applied to driving wheels of a vehicle comprising:

   a control portion (17a, 17c) for controlling grounded loads of first and second driving wheels (1RR, 1RL), the first driving wheel traveling on a first road whose coefficient of friction is higher than a coefficient of friction of a second road on which the second driving wheel travels,

   wherein the control portion (17a, 17c) increases the grounded load of the first driving wheel and decreases the grounded load of the second driving wheel when the coefficient of friction of the first road is higher than the coefficient of friction of the second road at starting the vehicle.

2. The apparatus for controlling loads applied to the driving wheels according to the claim 1, further comprising:

   a detecting portion (16e) for detecting the coefficient of friction of the first and second roads, wherein the control portion (17a, 17c) controls the grounded load of the first and second driving wheels (1RR, 1RL), during a period in which differential rotations of the first and second driving wheels (1RR, 1RL) are limited by a limiting portion (14, 16, 5RR, 5RL).

3. The apparatus for controlling loads applied to the driving wheels according to the claim 2, wherein the limiting portion (14, 16, 5RR, 5RL) applies braking torque to one of the first and second driving wheels (1RR, 1RL), and the control portion (17a, 17c) determines whether the limiting portion (14, 16, 5RR, 5RL) is in its operation or not, and controls the grounded loads of the first and second driving wheels (1RR, 1RL), when the limitingportion (14, 16, 5RR, 5RL) is in its operation.

4. The apparatus for controlling loads applied to the driving wheels according to the claim 2, wherein the control portion (17a, 17c) determines whether a vehicle speed is lower than a reference value or not, and the control portion (17a, 17c) controls the grounded loads of the first and second driving wheels (1RR, 1RL), when the vehicle speed is lower than the reference value.

5. The apparatus for controlling loads applied to the driving wheels according to the claim 2, wherein the control portion (17a, 17c) determines whether a road surface gradient of the road on which the vehicle is running is larger than a reference value, and the control portion (17a, 17c) controls the grounded loads of the first and second driving wheels (1RR, 1RL), when the road surface gradient is larger than the reference value.

6. The apparatus for controlling loads applied to the driving wheels according to the claim 2, wherein

the detecting portion (16e) detects a difference between the coefficients of friction of the first and second roads, and the control portion (17a, 17c) controls the grounded loads of the first and second driving wheels (1RR, 1RL), such that a difference between the grounded loads of the first and second driving wheels (1RR, 1RL) is made larger as the difference between the coefficients of friction of the first and second roads becomes larger.

7. The apparatus for controlling loads applied to the driving wheels according to the claim 2, wherein
the control portion (17a, 17c) drives suspension actuators (7RR, 7RL), each of which has a hydraulic cylinder connected at its one end to a vehicle body and at its other end to a respective driving wheel (1RR, 1RL), and
the control of the grounded loads of the first and second driving wheels (1RR, 1RL) is carried out by expansion or contraction of the respective hydraulic cylinder.

8. The apparatus for controlling loads applied to the driving wheels according to the claim 2, wherein
the control portion (17a, 17c) drives a stabilizer actuator (4R) provided on a stabilizing bar supported by a vehicle body, both ends of which are respectively connected to the first and second driving wheels (1RR, 1RL),
the stabilizer actuator (4R) has a mechanism for applying torsional force to the stabilizing bar, and
the control of the grounded loads of the first and second driving wheels (1RR, 1RL) is carried out by controlling the torsional force to the stabilizing bar.

9. The apparatus for controlling loads applied to the driving wheels according to the claim 1 or 2, further comprising:

a traction control portion (16) for applying braking torque to the first driving wheel (1RR/1RL), an acceleration slip of the first driving wheel (1RR/1RL) being larger than a reference value and an acceleration slip of the second driving wheel (1RR/1RL) being less than the reference value, in order to reduce the acceleration slip; and wherein the control portion (17a, 17c) controls grounded load of the first and second driving wheels (1RR, 1RL), during a period in which the traction control portion (16) is operated,
wherein the control portion (17a, 17c) increases the grounded load of second driving wheels (1RR/1RL), for which the braking torque by the traction control portion is not applied, and
wherein the control portion (17a, 17c) decreases the grounded load of the first driving wheel (1RR/1RL).

10. The apparatus for controlling loads applied to the driving wheels according to the claim 9, wherein
the control portion (17a, 17c) drives suspension actuators (7RR, 7RL), each of which has a hydraulic cylinder connected at its one end to a vehicle body and at its other end to a respective driving wheel (1RR, 1RL), and
the control of the grounded loads of the first and second driving wheels (1RR, 1RL) is carried out by expansion or contraction of the respective hydraulic cylinder.

11. The apparatus for controlling loads applied to the driving wheels according to the claim 9, wherein
the control portion (17a, 17c) drives a stabilizer actuator (4R) provided on a stabilizing bar supported by a vehicle body, both ends of which are respectively connected to the first and second driving wheels (1RR, 1RL),
the stabilizer actuator (4R) has a mechanism for applying torsional force to the stabilizing bar, and
the control of the grounded loads of the first and second driving wheels (1RR, 1RL) is carried out by controlling the torsional force to the stabilizing bar.

# FIG. 1

EP 1 995 091 A2

# FIG. 2

EP 1 995 091 A2

# FIG. 3

```
                    ( SELECTING PORTION )
                              │
                              │           ┌─ 310
                           ◇─────────────◇         NO
                           │ μ-SPRIT ROAD? │ ──────────────────────┐
                           ◇─────────────◇                         │
                              │ YES                                 │
                              │           ┌─ 320                    │
                           ◇─────────────◇         NO               │
                          │ IS TRACTION CONTROL │ ──────────────────┼──▶
                          │     OPERATED?       │                   │
                           ◇─────────────◇                         │
                              │ YES                                 │
                              │           ┌─ 330                    │
                           ◇─────────────◇         NO               │
                          │  VEHICLE SPEED<     │ ──────────────────┼──▶
                          │  REFERENCE SPEED?   │                   │
                           ◇─────────────◇                         │
                              │ YES       ┌─ 340                    │
                           ◇─────────────◇         NO               │
                          │ IS MANUAL SWITCH ON? │ ─────────────────┼──▶
                           ◇─────────────◇                         │
                              │ YES       ┌─ 350                    │
                           ◇─────────────◇         NO               │
                          │ ROAD SURFACE GRADIENT │ ────────────────┼──▶
                          │ >REFERENCE GRADIENT?  │                 │
                           ◇─────────────◇                         │
                              │ YES  ┌─ 370              ┌─ 360      │
                    ┌───────────────────────────┐  ┌──────────────────────┐
                    │ CONTROL OF START ASSISTANCE│  │   POSTURE CONTROL    │
                    └───────────────────────────┘  └──────────────────────┘
                              │                              │
                              │◀─────────────────────────────┘
                              ▼
                        ( RETURN )
```

# FIG. 4

# FIG. 5

# FIG. 6

# FIG. 7

# FIG. 8

**EP 1 995 091 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000127733 A
- JP 2006168386 A
- JP 2005238971 A